# FASCICULE DE BREVET EUROPEEN

(11) **EP 2 221 229 B1**
(45) Date de publication et mention de la délivrance du brevet: **16.05.2012**
(21) Numéro de dépôt: 10153779.3
(22) Date de dépôt: 17.02.2010
(51) Int. Cl.: B62B 1/14

(54) **Ensemble de transport pour une tente repliée, ou autre objet volumineux similaire**
Transportvorrichtung für ein zusammengefaltes Zelt oder ähnlichen voluminösen Gegenstand
Transporting device for a folded tent or other voluminous similar item

(30) Priorité: 23.02.2009 FR 0900800
(43) Date de publication de la demande: 25.08.2010
(73) Titulaire: LP TENT Sarl, 38540 Grenay (FR)
(72) Inventeur: Robba, Carlo, 69720, St Laurent de Mure (FR)
(74) Mandataire: Jeannet, Olivier

(56) Documents cités:
- EP-A- 1 426 265
- WO-A-02/08043
- FR-A- 2 913 655
- GB-A- 2 278 318
- KR-A- 20030 050 377
- US-A1- 2004 188 963
- US-B1- 7 219 902

## Description

La présente invention concerne un ensemble de transport pour une tente repliée.

Les tentes utilisées à l'occasion d'événements tels que des salons professionnels, des réunions sportives, etc. doivent pouvoir être montées et démontées rapidement, ce qui implique de pouvoir les transporter facilement entre un véhicule de transport ou un lieu de stockage et le lieu de leur installation. Ces tentes ont généralement une armature à quatre poteaux de coin reliés par des ciseaux, et présentent, à l'état replié, une forme sensiblement parallélépipédique, de hauteur importante et de surface d'appui au sol relativement réduite.

Pour le transport de telles tentes, il est connu d'utiliser divers types d'ensembles de transport comprenant des dispositifs de transport et des housses reliées à ces dispositifs. Un dispositif de transport connu comprend une plaque horizontale destinée à être engagée sous la tente repliée, une plaque verticale reliée à la housse et deux roues situées de part et d'autre de ces plaques. La housse est en un matériau souple et est dimensionnée de manière à être relativement ajustée à la tente. Elle est équipée d'une fermeture à glissières permettant de l'ouvrir longitudinalement, de sorte qu'elle est apte à être engagée autour d'une tente repliée, puis de la refermer autour de cette tente de manière à assurer le positionnement de la tente par rapport au dispositif de transport.

La mise en place des ensembles de transport existants autour de tentes n'est pas toujours très aisée, compte tenu de la liaison du dispositif de transport à la housse et du caractère ajusté de cette housse aux dimensions de la tente. Lorsque les objets à transporter présentent des hauteurs importantes et des surfaces d'appui au sol relativement réduites, comme cela est le cas de tentes repliées, le risque existe d'un renversement de l'objet lors de la manipulation de ces ensembles de transport. Des dommages au personnel affecté au montage, démontage et transport des tentes peuvent en résulter, compte tenu du poids relativement important de ces dernières, de même que des dommages à la tente. Le document EP 1 426 265 décrit un ensemble de transport selon le préambule de la revendication 1.

Le document KR 2003 0050377 décrit un chariot de transport de type "caddie", dans lequel la poche en matériau souple est reliée par le haut et par le bas à l'arceau de la structure du chariot et dans lequel le sommet de l'arceau est bien plus élevé que le sommet de la poche, ainsi que cela est naturel sur un chariot de transport de ce type. Ce chariot n'est pas adapté au transport d'une tente repliée, ou d'un autre objet similaire, à la fois volumineux et ayant une hauteur importante.

La présente invention vise à remédier à ces inconvénients essentiels.

L'ensemble de transport qu'elle concerne comprend, de manière connue en soi, un dispositif de transport et une housse, le dispositif de transport comprenant une plaque destinée à être engagée sous la tente repliée et au moins une roue, et la housse étant destinée à être engagée autour de la tente.

Selon l'invention,
- le dispositif de transport comprend une structure rigide s'étendant sensiblement perpendiculairement au plan de ladite plaque, et ayant une hauteur telle que la partie supérieure de cette structure se situe, à partir du sol, entre le quart et la moitié de la hauteur de la tente ; et
- la housse comprend des moyens de liaison à elle de la partie supérieure de cette structure rigide, permettant, lorsque cette liaison est effective, la mobilité du dispositif de transport entre une position de pré-engagement, dans laquelle la structure rigide est inclinée et ladite plaque n'est pas engagée sous la tente à transporter, et une position d'engagement, dans laquelle la structure rigide est disposée contre la housse et ladite plaque est engagée sous cette tente, lesdits moyens de liaison permettant le passage du dispositif de transport de ladite position de pré-engagement à ladite position d'engagement par pivotement du dispositif de transport par rapport à la tente, ce pivotement étant réalisé par inclinaison de cette tente.

Ainsi, grâce à ces moyens de liaison à la housse, le dispositif de transport peut, dans ladite position de pré-engagement, être positionné de manière idéale par rapport à la tente pour réaliser l'engagement de la plaque de ce dispositif sous la tente par simple inclinaison de la tente. Cet engagement est ensuite réalisé par simple inclinaison de la tente du côté opposé à celui sur lequel se trouve le dispositif de transport ; la tente est ensuite à nouveau inclinée du côté sur lequel se trouve le dispositif de transport afin de réaliser le chargement de la tente sur la plaque que comprend ce dispositif.

La manipulation de l'ensemble de transport selon l'invention est ainsi parfaitement aisée et le risque d'un renversement de la tente lors de la manipulation de cet ensemble de transport est très réduit.

Lesdits moyens de liaison peuvent notamment être sous forme d'au moins une pièce de matériau souple apte à autoriser par sa déformation le pivotement du dispositif de transport entre les positions de pré-engagement et d'engagement précitées.

De préférence, lesdits moyens de liaison sont tels que le dispositif de transport n'est pas relié de manière permanente à la housse.

Cette dernière peut ainsi être mise en place sur la tente sans que le dispositif de transport ne soit relié à elle, ce qui rend cette mise en place très aisée. Une fois cette opération réalisée, le dispositif de transport peut être relié à la housse alors qu'il est en position de pré-engagement puis être amené en position d'engagement de la manière précitée.

Ces moyens de liaison peuvent, dans ce cas, inclure des parties en matériaux auto-aggripants complémentaires.

Selon une forme de réalisation préférée de l'invention,
- les moyens de liaison comprennent deux pièces de matériau souple reliées à la housse, parallèles l'un à l'autre, formant des volets dont un est intérieur, c'est-à-dire situé du côté de la housse, et l'autre est extérieur, c'est-à-dire situé du côté opposé à la housse, ces volets comportant des zones en un matériau auto-agrippant, et
- la partie supérieure de ladite structure rigide comprend, sur deux côtés opposés, des zones en matériau auto-agrippant complémentaire de celui des volets, la liaison de ladite partie supérieure à la housse étant réalisée en écartant le volet extérieur, en réalisant la liaison d'un côté de cette partie supérieure au volet intérieur, puis en rabattant le volet extérieur sur l'autre côté de ladite partie supérieure.

Un positionnement précis du dispositif de transport par rapport à la housse, et une parfaite liaison de ce dispositif de transport à la housse, sont ainsi obtenus.

Ladite structure rigide peut notamment se présenter sous la forme d'un arceau en forme de U inversé ; dans ce cas, l'ensemble de transport comprend avantageusement un fourreau ajusté à cet arceau, comportant, sur deux parois opposées, lesdites zones en matériau auto-agrippant, ce fourreau pouvant être engagé de manière ajustée sur l'arceau afin de réaliser l'assemblage à l'arceau desdites zones en matériau auto- agrippant.

Ce fourreau a également pour avantage de permettre une protection de l'arceau.

Avantageusement, l'ensemble de transport comprend des moyens permettant d'empêcher le retour du dispositif de transport en position de pré-engagement après que ce dispositif de transport ait été amené en position d'engagement.

Ces moyens d'empêchement permettent de sécuriser l'opération de chargement de la tente.

Ils peuvent notamment être sous forme d'une ou plusieurs sangles destinées à entourer la housse et ladite structure rigide du dispositif de transport.

L'invention sera bien comprise, et d'autres caractéristiques et avantages de celle-ci apparaîtront, en référence au dessin schématique annexé, représentant, à titre d'exemple non limitatif, une forme de réalisation préférée de l'ensemble de transport qu'elle concerne.
La figure 1 est une vue en perspective éclatée d'une housse, d'un dispositif de transport et d'un fourreau qu'il comprend, la housse étant engagée sur une tente repliée ; et
les figures 2 à 5 en sont des vues de côté, en coupe longitudinale de la housse, au cours de quatre étapes successives de chargement de la housse sur le dispositif de transport.
Les figures représentent un ensemble de transport 1 pour une tente repliée 100, ou autre objet volumineux similaire, comprenant essentiellement une housse 2, un dispositif de transport 3 et un fourreau 4.

La tente 100 est du genre de celles utilisées à l'occasion d'événements tels que des salons professionnels, des réunions sportives, etc., comprenant une armature à quatre poteaux de coin reliés par des ciseaux. Elle présente ainsi, à l'état replié, une forme sensiblement parallélépipédique, de hauteur de l'ordre de 2 à 2,5 m, et de surface d'appui au sol relativement réduite, de l'ordre de 0,4 x 0,4 m.

La housse 2 est en un matériau souple et est dimensionnée de manière à être engagée autour de la tente repliée 100, sans être précisément ajustée aux dimensions de cette tente repliée. Elle comprend un fond 2a destiné à venir contre le sommet de la tente, et des parois latérales 2b dimensionnées pour s'interrompre, lorsque le fond 2a repose contre le sommet de la tente, en retrait des pieds des poteaux de la tente.

La housse 2 est équipée entre deux parois 2b d'une fermeture à glissières 10 permettant de l'ouvrir longitudinalement, afin de permettre son engagement autour de la tente puis de la refermer autour de cette dernière.

La housse 2 comprend également deux pièces de matériau souple reliées à elle, environ au tiers de sa hauteur à partir du sol. Ces pièces sont disposées l'une contre l'autre et sont fixées à la housse 2, par des coutures, au niveau d'une partie de base 11. Elles sont réunies l'une à l'autre par des coutures permettant de former une partie intermédiaire souple 12, et des parties libres constituant des volets 13 parallèles l'un à l'autre, l'un de ces volets 13 étant intérieur, c'est-à-dire situé du côté de la housse 2, et l'autre étant extérieur, c'est-à-dire situé du côté opposé à la housse.

Ces pièces de matériau souple peuvent notamment être réalisées dans le même matériau que la housse 2.

Les volets 13 comportent, sur leurs faces en regard, des zones en un premier matériau auto-agrippant d'un système de matériaux auto-agrippants complémentaires.

Le dispositif de transport 3 comprend une première plaque 15 destinée à être engagée sous la tente 100, une deuxième plaque 16 reliée à la première plaque 15, perpendiculairement à celle-ci, deux roues 17 situées de part et d'autre des plaques 15 et 16 et un arceau 18 en forme de U inversé, formant une structure rigide qui s'étend sensiblement perpendiculairement au plan de la plaque 15. Cet arceau 18 a une hauteur telle que sa partie supérieure se situe, à partir du sol, sensiblement au tiers de la hauteur de la tente 100.

Le fourreau 4 est dimensionné de façon à pouvoir recevoir en lui l'arceau 18 de manière ajustée. Il comporte, du côté opposé à son ouverture d'engagement sur l'arceau 18, sur ses deux parois opposées, des zones 20 faites du deuxième matériaux auto agrippant du système de matériaux auto agrippants précité.

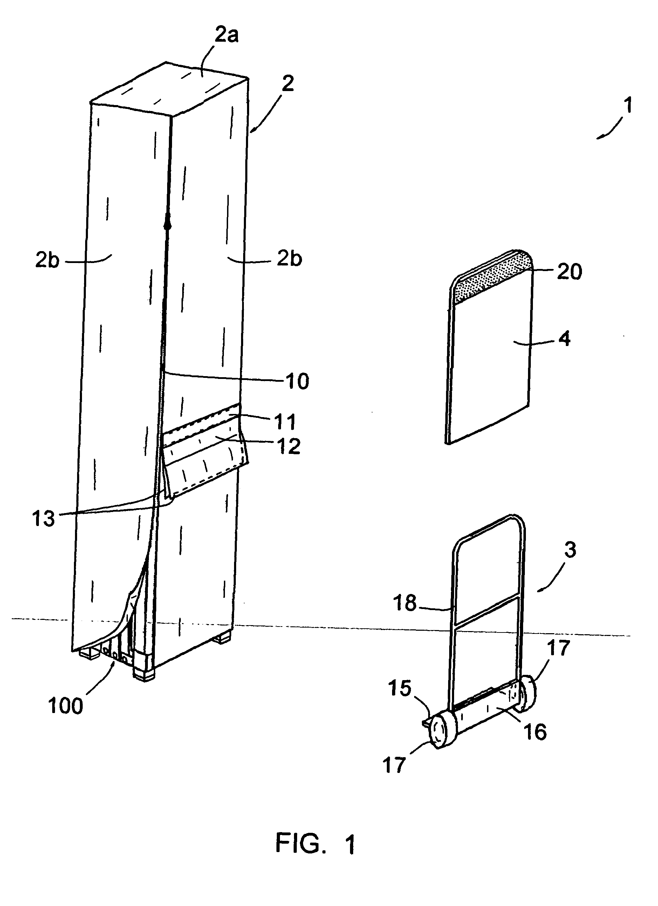

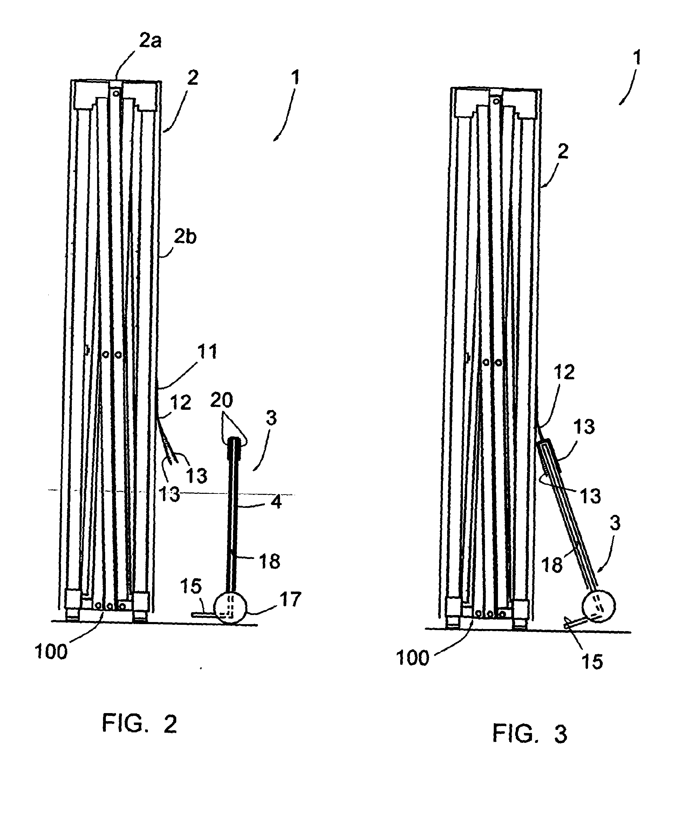

En pratique, la housse 2 est mise en place sur la tente 100 comme montré sur les figures 1 et 2 puis le curseur de la fermeture à glissières 10 est déplacé pour réaliser la fermeture de cette housse sur la tente. Lors de cette opération, le dispositif de transport 3, dont l'arceau 18 est revêtu du fourreau 4, n'est pas relié à la housse 2 (cf. figure 2).

Une fois la housse 2 en place sur la tente 100, le dispositif de transport 3 est relié à la housse 2 en écartant le volet 13 extérieur, en réalisant la liaison de la zone 20 du côté correspondant du fourreau 4 au volet 13 intérieur, puis en rabattant le volet 13 extérieur sur la zone 20 située de l'autre côté du fourreau 4. Le dispositif de transport 3 se trouve alors dans une position de pré-engagement, visible sur la figure 3, dans laquelle l'arceau 18 est incliné et la plaque 15 n'est pas engagée sous la tente 100. Ce dispositif de transport 3 est alors positionné de manière idéale par rapport à la tente 100 pour réaliser l'engagement de la plaque 15 sous la tente 100 par simple inclinaison de cette tente.

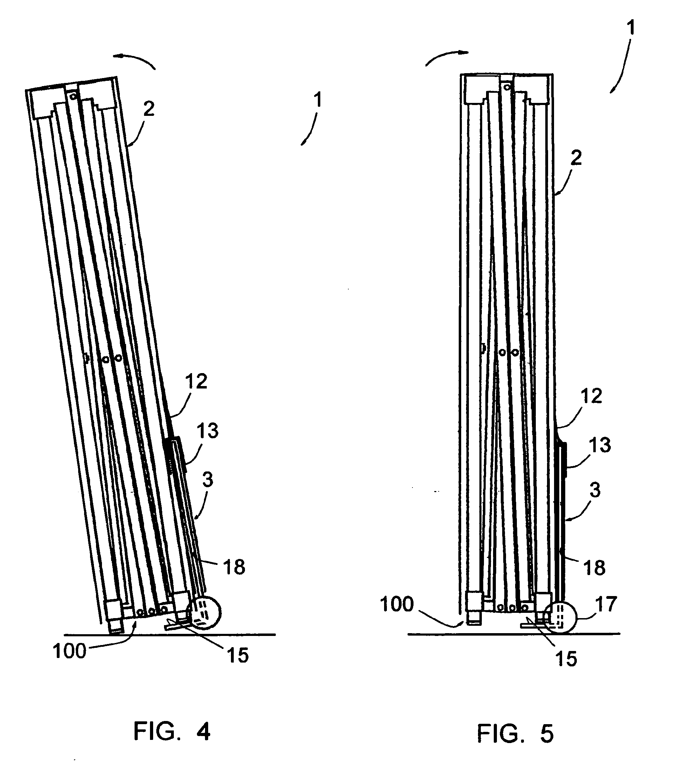

La tente 100 est ensuite inclinée du côté opposé à celui sur lequel se trouve le dispositif de transport 3, permettant à ce dernier de passer, par simple pivotement rendu possible par la souplesse de la partie intermédiaire 12, de passer de ladite position de pré-engagement à la position d'engagement montrée sur la figure 4, dans laquelle l'arceau 18 est disposé contre la housse 2 et la plaque 15 est engagée sous cette tente. La tente 100 est ensuite à nouveau inclinée du côté sur lequel se trouve le dispositif de transport 3 afin de réaliser le chargement de cette tente sur la plaque 15 (cf. figure 5).

Ainsi que cela apparaît de ce qui précède, l'invention fournit un ensemble de transport 1 présentant, par rapport aux ensembles homologues de la technique antérieure, les avantages déterminants d'avoir une manipulation parfaitement aisée et de réduire très fortement le risque d'un renversement de la tente lors de cette manipulation.

L'invention a été décrite ci-dessus en référence à une forme de réalisation fournie à titre d'exemple. Il va de soi qu'elle n'est pas limitée à cette forme de réalisation mais qu'elle s'étend à toutes les autres formes de réalisations couvertes par les revendications ci-annexées.

## Revendications

1. - Ensemble de transport (1) pour une tente repliée (100) comprenant un dispositif de transport (3) et une housse (2), le dispositif de transport (3) comprenant une plaque (15) destinée à être engagée sous la tente repliée (100) et au moins une roue (17), et la housse (2) étant destinée à être engagée autour de la tente (100) ;
**caractérisé en ce que** :
- le dispositif de transport (3) comprend une structure rigide (18) s'étendant sensiblement perpendiculairement au plan de ladite plaque (15), et ayant une hauteur telle que la partie supérieure de cette structure (18) se situe, à partir du sol, entre le quart et la moitié de la hauteur de la tente (100) ; et
- la housse (2) comprend des moyens (11, 12, 13) de liaison à elle de la partie supérieure de cette structure rigide (18), permettant, lorsque cette liaison est effective, la mobilité du dispositif de transport (3) entre une position de pré-engagement, dans laquelle la structure rigide (18) est inclinée et ladite plaque (15) n'est pas engagée sous la tente (100) à transporter, et une position d'engagement, dans laquelle la structure rigide (18) est disposée contre la housse (2) et ladite plaque (15) est engagée sous cette tente, lesdits moyens de liaison (11, 12, 13) permettant le passage du dispositif de transport (3) de ladite position de pré-engagement à ladite position d'engagement par pivotement du dispositif de transport (3) par rapport à la tente (100), ce pivotement étant réalisé par inclinaison de cette tente.

2. - Ensemble de transport (1) selon la revendication 1, **caractérisé en ce que** lesdits moyens de liaison sont sous forme d'au moins une pièce de matériau souple (11, 12, 13) apte à autoriser par sa déformation le pivotement du dispositif de transport (3) entre les positions de pré-engagement et d'engagement précitées.

3. - Ensemble de transport (1) selon la revendication 1 ou la revendication 2, **caractérisé en ce que** lesdits moyens de liaison (11, 12, 13) sont tels que le dispositif de transport (3) n'est pas relié de manière permanente à la housse (2).

4. - Ensemble de transport (1) selon la revendication 3, **caractérisé en ce que** les moyens de liaison (11, 12, 13) incluent des parties en matériaux auto-aggripants complémentaires.

5. - Ensemble de transport (1) selon la revendication 4, **caractérisé en ce que** :
- les moyens de liaison (11, 12, 13) comprennent deux pièces de matériau souple reliées à la housse (2), parallèles l'un à l'autre, formant des volets (13) dont un est intérieur, c'est-à-dire situé du côté de la housse (2), et l'autre est extérieur, c'est-à-dire situé du côté opposé à la housse (2), ces volets (13) comportant des zones en un matériau auto-agrippant, et
- la partie supérieure de ladite structure rigide (18) comprend, sur deux côtés opposés, des zones (20) en matériau auto-agrippant complémentaire de celui des volets (13),
la liaison de ladite partie supérieure à la housse (2) étant réalisée en écartant le volet (13) extérieur, en réalisant la liaison d'un côté de cette partie supérieure au volet (13) intérieur, puis en rabattant le volet (13) extérieur sur l'autre côté de ladite partie supérieure.

6. - Ensemble de transport (1) selon la revendication 5, **caractérisé en ce que** ladite structure rigide se présente sous la forme d'un arceau (18) en forme de U inversé, et **en ce que** l'ensemble de transport (1) comprend un fourreau (4) ajusté à cet arceau (18), comportant, sur deux parois opposées, lesdites zones (20) en matériau auto-agrippant, ce fourreau (4) pouvant être engagé de manière ajustée sur l'arceau (18) afin de réaliser l'assemblage à l'arceau (18) desdites zones (20) en matériau auto- agrippant.

7. - Ensemble de transport (1) selon l'une des revendications 1 à 6, **caractérisé en ce qu'**il comprend des moyens permettant d'empêcher le retour du dispositif de transport (3) en position de pré-engagement après que ce dispositif de transport (3) ait été amené en position d'engagement.

8. - Ensemble de transport (1) selon la revendication 7, **caractérisé en ce que** ces moyens sont sous forme d'une ou plusieurs sangles destinées à entourer la housse (2) et ladite structure rigide (18) du dispositif de transport (3).

## Claims

1. - Transport device (1) for a folded tent (100) comprising a transport device (3) and a cover (2), the transport device (3) comprising a plate (15) intended to be engaged under the folded tent (100) and at least one wheel (17), and the cover (2) being intended to be engaged around the tent (100);
**characterized in that**
- the transport device (3) comprises a rigid structure (18) extending substantially perpendicularly to the plane of said plate (15), and having a height such that the upper part of the structure (18) is located, from the ground, between a quarter and half the height of the tent (100), and
- the cover (2) comprises means (11, 12, 13) for connection to it of the upper part of the rigid structure (18) allowing, when this connection is effective, the mobility of the transport device (3) between a pre-engagement position, wherein the rigid structure (18) is inclined and said plate (15) is not engaged under the tent (100) to be transported, and an engagement position, wherein the rigid structure (18) is placed against the cover (2) and said plate (15) is engaged under this tent, said connecting means (11, 12, 13) allowing the passage of the transport device (3) from said pre-engagement position to said engagement position by pivoting the transport device (3) with respect to the tent (100), this pivoting being achieved by inclination of the tent.

2. - Transport device (1) according to claim 1, **characterized in that** said means for connection are in the form of at least one piece of flexible material (11, 12, 13) capable of allowing, by its deformation, the pivoting of the transport device (3) between the aforementioned pre-engagement and engagement positions.

3. - Transport device (1) according to claim 1 or claim 2, **characterized in that** said means for connection (11, 12, 13) are such that the transport device (3) is not permanently connected to the cover (2).

4. - Transport device (1) according to claim 3, **characterized in that** the means for connection (11, 12, 13) include parts of complementary self-adhering material.

5. - Transport device (1) according to claim 4, **characterized in that**:
- the means for connection (11, 12, 13) comprises two pieces of material connected to the cover (2), parallel to each other, forming flaps (13) of which one is in a lower position, that is to say on the side of the cover (2), and the other is external, that is to say on the side opposite to the cover (2), these flaps (13) having areas of self-adhering material, and
- the upper part of said rigid structure (18) comprises, on two opposite sides, areas (20) of self-gripping material complementary to that of the flaps (13),
the binding of said upper portion to the cover (2) being achieved by moving the external flap (13) outward, by making the connection of one side of this upper part to the inner flap (13), then by folding the outer flap (13) on the other side of said upper portion.

6. - Transport device (1) according to claim 5, **characterized in that** said rigid structure is in the form of an inverted U-shaped arch (18), and **in that** the transport device (1) comprises a sleeve (4) fitted to said arch (18), comprising, on two opposite walls, said areas (20) of self-gripping material, this sleeve (4) being fittingly engageable on the arch (18) so as to achieve the mounting on the arch (18) of said areas (20) of self-gripping material.

7. - Transport device (1) according to one of claims 1 to 6, **characterized in that** it comprises means capable to prevent the return of the transport device (3) in the pre-engagement position after the transport device (3) has been brought into the engagement position.

8. - Transport device (1) according to claim 7, **characterized in that** these means are in the form of one or more straps intended to surround the cover (2) and said rigid structure (18) of the transport device (3).

## Patentansprüche

1. Transportvorrichtung (1) für ein zusammengefaltes Zelt (100) mit einer Transporteinrichtung (3) und einem Deckel (2) bestehend aus, wobei die Transporteinrichtung (3) eine Platte (15), die in Eingriff gebracht werden gefaltet Zelt (100) dazu bestimmt ist und mindestens ein Rad (17), und der Deckel (2) um das Zelt (100) in Eingriff gebracht werden;
**dadurch gekennzeichnet, dass**
- die Transporteinrichtung (3) eine starre Struktur (18), die sich im wesentlichen senkrecht zur Ebene der Platte (15) und mit einer solchen Höhe, dass der obere Teil der Struktur (18) befindet, von der Boden, zwischen einem Viertel und der Hälfte der Höhe des Zeltes (100), und
- der Deckel (2) Mittel (11, 12, 13) zum Anschließen eines im oberen Teil der starren Struktur (18) zum, wenn diese Verbindung wirksam ist, die Mobilität der Transporteinrichtung (3) zwischen ein Pre-Eingriffsposition, wobei die starre Struktur (18) geneigt ist und die Platte (15) nicht in das Zelt (100) transportiert werden, und einer Eingriffsposition in Eingriff, wobei die starre Struktur (18) gegen den Deckel (2) angeordnet ist und die Platte (15) in diesem Zelt in Eingriff, wobei die Verbindungsmittel (11, 12, 13), die den Durchgang der Transporteinrichtung (3) des Pre-Eingriffsposition dem Eingriff durch Schwenken der Transporteinrichtung (3) in Bezug auf das Zelt (100), wobei dies durch Schwenken Neigung des Zeltes erreicht.

2. Transportvorrichtung (1) nach Anspruch 1, **dadurch gekennzeichnet, daß** die Verbindungsmittel in Form von mindestens einem Stück aus flexiblem Material (11, 12, 13) aufweist, so dass die Verformung durch das Schwenken der Vorrichtung der Transport (3) zwischen den Positionen der Pre-Engagement und das Engagement vor.

3. Transportvorrichtung (1) nach Anspruch 1 oder Anspruch 2, **dadurch gekennzeichnet daß** die Verbindungsmittel (11, 12, 13) derart sind, dass die Transportvorrichtung (3) an der Abdeckung (2) nicht fest verbunden ist.

4. Transportvorrichtung (1) nach Anspruch 3, **dadurch gekennzeichnet, dass** die Verbindungsmittel (11, 12, 13) umfassen Bereiche in der komplementäre komplementären Selbst-Griffmaterial Teilen.

5. Transportvorrichtung (1) nach Anspruch 4, **dadurch gekennzeichnet, daß**:
- die Verbindungsmittel (11, 12, 13) zwei Stücken des Materials mit dem Deckel (2), parallel zueinander, Formklappen (13), von denen im Inneren ist, das ist die diejenige Seite des Deckels (2), und der andere externe, das auf der gegenüberliegenden Seite des Deckels (2), selbst, wobei diese Klappen (13) Bereiche aus einem Material selbst Greifen, und
- der obere Teil der starren Struktur (18) aufweist, an zwei gegenüberliegenden Seiten, Bereiche (20) selbsthaftenden Material komplementär zu derjenigen der Klappen (13),
die Bindung des oberen Teils an der Abdeckung (2) durch Verstellen der Klappe (13) außerhalb gebildet wird, wodurch die Verbindung zu einer Seite dieses oberen Teils an der Klappe (13) innerhalb, dann durch Falten der Klappe (13) außen auf der anderen Seite des oberen Abschnitts.

6. Transportvorrichtung (1) nach Anspruch 5, dass die starre Struktur in Form eines Bogens (18) in umgekehrter U-Form, **dadurch gekennzeichnet** und **dadurch gekennzeichnet, daß** die Transporteinheit (1) eine Hülse (4), die an dem Bogen (18), umfassend, an zwei gegenüberliegenden Wänden, wobei die Bereiche (20) selbsthaftenden Material, diese Hülse (4) aufweist, und kraftschlüssig an dem Bügel (18) um die Anordnung mit dem Bogen (18) der Zonen (20) selbsthaftenden Material zu erzielen.

7. Transportvorrichtung (1) nach einem der Ansprüche 1 bis 6, **dadurch gekennzeichnet, dass** sie Mittel, um die Rückkehr der Transporteinrichtung (3) in der Vor-Eingriffsposition, nachdem das Gerät zu verhindern Transport (3) hat in Eingriff gebracht worden ist.

8. Transportvorrichtung (1) nach Anspruch 7, **dadurch gekennzeichnet, daß** diese Mittel in Form von einem oder mehreren Trägern, umgeben den Deckel (2) und der starren Struktur (18) der Transporteinrichtung (3).
